# EUROPEAN PATENT APPLICATION

(11) **EP 4 324 668 A1**
(43) Date of publication of application: **21.02.2024**
(21) Application number: 23192074.5
(22) Date of filing: 18.08.2023
(51) Int. Cl.: B60H 1/00, B60H 1/24

(54) **VENT SWITCHING BETWEEN INDIRECT AND DIRECT MODES**

(30) Priority: 18.08.2022 US 202263371812 P; 20.09.2022 US 202263376398 P; 17.08.2023 US 202318451811
(71) Applicant: Apple Inc., Cupertino, CA 95014 (US)
(72) Inventor: KEARNEY, John M., Santa Clara, 95051 (US); GRENKE, Aaron J., Santa Clara, 95051 (US); YEOMANS, Paul D., Santa Clara, 95051 (US); WUJEK, Scott, Santa Clara, 95051 (US); CONNICK, Kegan J., Santa Clara, 95051 (US)
(74) Representative: COPA Copenhagen Patents

(57) **Abstract**

A vehicle (800) comprising a structural beam (804) defining an interior beam volume, a window (806) adjacent the structural beam (804), an interior cabin defined by the structural beam (804) and the window (806), and an environmental conditioning system including a switch (852) operable between a first position and a second position, an indirect configuration with the switch (852) operating in the first position and a direct configuration with the switch (852) operating in the second position, wherein the indirect configuration can direct the air from the interior beam volume onto the window (806) and the direct configuration can direct the air from the interior beam volume toward the user (801).

## Description

### CROSS-REFERENCE TO RELATED APPLICATION(S)

This claims priority to US Patent Application No. 18/451,811, filed 17 August 2023, U.S. Provisional Patent Application No. 63/376,398, filed 20 September 2022, and to U.S. Provisional Patent Application No. 63/371,812, filed 18 August 2022, the disclosures of which are hereby incorporated by reference in their entireties.

### FIELD

The present disclosure relates generally to thermal conditioning systems. More particularly, the present disclosure relates to thermal conditioning system vents.

### BACKGROUND

Controlling the temperature inside internal volumes is important to provide a comfortable experience for users inside the internal volume. However, current thermal conditioning systems do not sufficiently achieve and maintain comfortable interior environments suitable for reacting to the many factors affecting interior temperatures. These factors can include outside temperature, humidity, solar load, the number of users, and so forth. The internal environmental condition of the internal volume can depend on several factors, both external and internal, which can change over time and from one use to another. However, thermal conditioning systems include components, for example ducts and vents, that are unaccommodating in operation and unable to adapt to the changing factors affecting the internal environment.

In addition, while current thermal conditioning systems include vents directing air toward the users, or toward various parts of the users, this may not be the most comfortable way to affect the interior volume temperature. While air of a certain temperature and velocity blown toward users provides a direct way of heating or cooling users, this does not effectively control all the heat transfer contributors discussed above. In addition, having hot or cold air blown directly onto the user can irritate the user.

Therefore, what is needed are adaptable thermal conditioning systems operable to account for situational variables to provide optimal comfort to users.

### SUMMARY

In at least one example of the present disclosure, a vehicle includes a structural beam defining an interior beam volume, a window adjacent the structural beam, an interior cabin defined by the structural beam and the window, an occupant seat disposed in the interior cabin, and an environmental conditioning system. The environmental conditioning system can include a switch operable between a first position and a second position, an indirect configuration with the switch operating in the first position and a direct configuration with the switch operating in the second position. The indirect configuration can direct the air from the interior beam volume onto the window, and the direct configuration can direct the air from the interior beam volume toward the occupant seat.

In one example, the switch is disposed in the interior beam volume such that the structural beam blocks a view of the switch by an occupant seated on the occupant seat. In one example, the vehicle further includes a first duct disposed in the interior beam volume and a second duct disposed in the interior beam volume. In such an example, the switch is configured to direct the air through the first duct when operating in the first position and the switch is configured to direct the air through the second duct when operating in the second position. In one example, the vehicle further includes an indirect vent through which the air exits from the first duct onto the window and a direct vent through which the air exits from the second duct toward the occupant seat. In one example, the switch is automatically operable based on input received from a vehicle environmental sensor. In one example, the switch is manually operable. In one example, the structural beam includes an overhead structural beam disposed between a first adjacent window and a second adjacent window. In one example, the overhead structural beam defines a vent configured to direct air from the interior beam volume onto the first window or toward the occupant seat.

In at least one example of the present disclosure, a vehicle includes a beam defining an interior beam volume, a roof, an interior cabin defined by the roof and the beam, the interior cabin defining a first volume and a second volume, a first vent to direct first conditioned air from the interior beam volume into the first volume, the first vent including a first direct vent configured to guide the first conditioned air away from the roof and a first indirect vent configured to guide the first conditioned air toward the roof, and a second vent to direct second conditioned air from the interior beam volume into the second volume, the second vent including a second direct vent configured to guide the second conditioned air away from the roof and a second indirect vent configured to guide the second conditioned air toward the roof.

In one example, the vehicle further includes a first switch disposed in the interior beam volume, the first switch operable between a first position and a second position. In such an example, in the first position, the first indirect vent is configured to guide the first conditioned air toward the roof and in the second position, the first direct vent is configured to guide the first conditioned air away from the roof. In one example, the vehicle further includes a second switch disposed in the interior beam volume, the second switch operable between the first position and the second position. In such an example, in the first position, the second indirect vent is configured to guide the second conditioned air away from the roof and in the second position, the second direct vent is configured to guide the second conditioned air toward the roof. In one example, the roof includes the beam. In one example, the roof includes a first window and a second window. In one example, the beam is disposed between the first window and the second window. In one example, the beam is disposed between the first window and the second window. In one example, the first volume is defined by the first window and the second volume is defined by the second window.

In at least one example of the present disclosure, a vehicle cabin conditioning system includes a duct disposed within an overhead beam of the vehicle, a first vent to direct air from the duct toward a window adjacent the overhead beam, and a second vent operable between a first operational configuration to direct the air in a first direction toward the window and a second operational configuration directing the air in a second direction toward an occupant in the vehicle cabin.

In one example, the second vent further includes a switch disposed within the overhead beam and operable between a first position and a second position. In such an example, in the first position, the second vent is configured to direct air in the first direction and in the second position, the second vent is configured to direct air in the second direct. In one example, the switch is automatically operable between the first position and the second position based on a detected solar load impinging on the window. In one example, the first direction is away from the occupant. In one example, the second direction is away from the window.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 shows a perspective view of an example of a vehicle;
FIG. 2 shows a perspective view of an example of a vehicle;
FIG. 3 shows a cross-sectional view of an example of a vehicle and an environmental conditioning system thereof;
FIG. 4 shows a cross-sectional view of an example of a vehicle and an environmental conditioning system thereof;
FIG. 5 shows a perspective view of an example of a vehicle include a first and second environmental conditioning systems;
FIG. 6 shows a perspective view of an example of a vehicle;
FIG. 7 shows a cross-sectional view of an example of a vehicle and an environmental conditioning system;
FIG. 8A shows a cross-sectional view of an example of a vehicle and an environmental conditioning system having a switch in a first position;
FIG. 8B shows a cross-sectional view of an example of a vehicle and an environmental conditioning system having a switch in a second position; and
FIG. 9 shows a diagram of an example of a controller for an environmental conditioning system.

### DETAILED DESCRIPTION

The present description provides details regarding representative embodiments illustrated in the accompanying drawings. The following descriptions are not intended to limit the embodiments to one preferred embodiment. Rather, the following descriptions are intended to cover alternatives, modifications, and equivalents as can be included within the spirit and scope of the described embodiments as defined by the appended claims.

The following disclosure relates to vehicles. More particularly, the present disclosure relates to environmental conditioning systems for vehicles. In a particular example, a vehicle can include an environmental conditioning system including one or more vents switchable between various operational modes. These various operational modes can change automatically or manually to accommodate changing environmental factors affecting the internal conditions of the vehicle. In one example, the environmental conditioning system can include a switch operable between a first position and a second position. An indirect configuration of the environmental conditioning system can include the switch operating in a first position to direct conditioned air onto a window, roof structure, or other structural body of the vehicle rather than directly at an occupant. A direct configuration of the system can include the switch operating in a second position to direct conditioned air away from the window or body structure and directly at the occupant. The switch can be disposed within the structure of the vehicle such that the occupant cannot see the switch operating, even while a vent visible to the user is changed from a direct to an indirect mode or configuration as noted above.

Vehicles having structural bodies substantially incorporating transparent windows may tend to suffer from unwanted radiative heat transfer more than others. An occupant who may be seated close to a window, either to the side, front, back, or above the occupant, can still feel radiative heat transferred through the window onto the occupant's skin, even when other direct vents are blowing air at the occupant. Because windows cannot house air ducts and vents, the direct air may not evenly heat or cool the occupant. For example, a front or rear vent blowing air at the occupant may cool the front or rear of the occupant, respectively, while a window disposed just to the side or above the occupant heats the side or top of the occupant, respectively, by radiative heat transfer. In such a scenario, while a comfortable average temperature of the overall cabin volume may be achieved, the occupant may continue to be exposed to an imbalanced temperature on one side of the body versus another. This imbalance of heat transfer felt by the occupant is typically perceived as an uncomfortable condition.

The cooling of the structure of the vehicle itself, due to the cooling effects of the indirect vents, can manage the heat transfer contributed by that structure, for example windows, to affect the ambient temperature of the interior cabin volume where occupants are seated. This indirect conditioning can reduce temperature imbalances imposed on the occupant and can create a more temperate and comfortable environment within the cabin, without relying only on vents directing conditioned air directly at the occupants.

As the occupant drives in different conditions, including varying weather, sunlight, and number of occupants, those factors affecting the internal environment of the vehicle may change, resulting in an initial ventilation mode being insufficient for the changed environmental factors. The adaptability of systems described herein, including the operability of a switch dictating whether various vents operate as indirect or direct vents, can automatically and blindingly accommodate these changing conditions to optimally condition the interior of a vehicle.

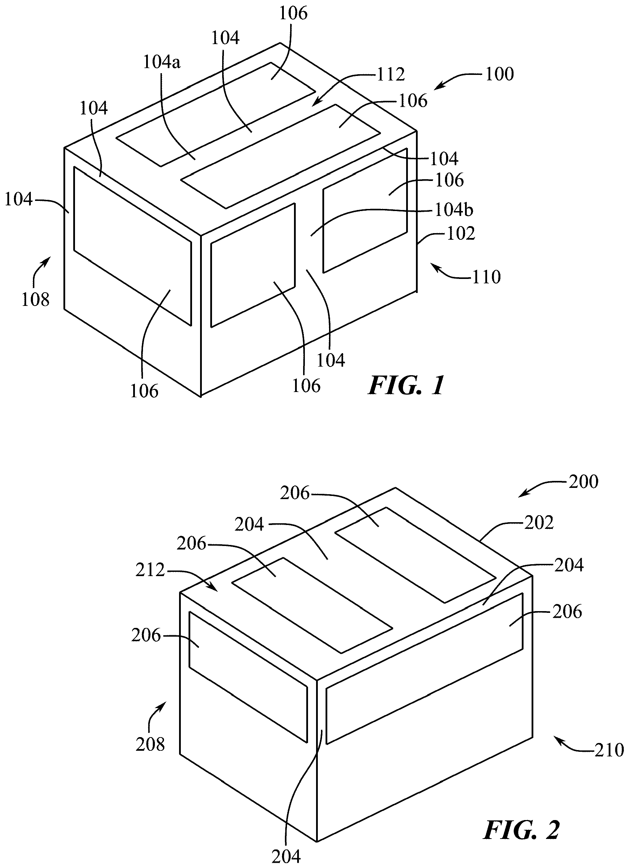

These and other embodiments are discussed below with reference to FIGS. 1-9. However, those skilled in the art will readily appreciate that the detailed description given herein with respect to these Figures is for explanatory purposes only and should not be construed as limiting. Furthermore, as used herein, a system, a method, an article, a component, a feature, or a sub-feature comprising at least one of a first option, a second option, or a third option should be understood as referring to a system, a method, an article, a component, a feature, or a sub-feature that can include one of each listed option (*e.g*., only one of the first option, only one of the second option, or only one of the third option), multiple of a single listed option (*e.g*., two or more of the first option), two options simultaneously (*e.g*., one of the first option and one of the second option), or combination thereof (*e.g*., two of the first option and one of the second option).

FIG. 1 illustrates a perspective to view of an example of a vehicle 100 including various structural elements. The vehicle 100 shown in FIG. 1 can include a body 102 having a roof, or a roof structure 112. The roof or roof structure 112 can refer to a top covering or portion of the vehicle 100 and can be formed of any number of materials and elements. The body 102 can define a front end or portion 108, and a rear end or portion 110. The body 102 can also include one or more structural beams 104, as well as one or more transparent material portions or windows 106. In one example, the term "beam" is not intended to infer a cross-sectional shape or configuration of the structural element, and the "beam" can have any number of cross-sectional geometries. In one example, the term "beam" can infer an elongate structural element. Also, in one example, the terms "structural," "structure," "structurally," and related terms refer to load bearing components and elements, or components and elements contributing to the physical form of an object, such as a vehicle. For example, the body of a vehicle can be formed of various structural elements adding to the form and shape of the vehicle, including load bearing elements such as load bearing structural beams, structural roof elements including load bearing or shape forming beams, plates, windows, sheets, and so forth.

In the illustrated example of FIG. 1, any of the structural beams 104 can be a part of a structural frame of the vehicle 100. In at least one example, the structural beams 104 can be disposed between adjacent windows 106. The various windows 106 adjacent to the beams 104 can be disposed on the front end 108, the rear end 110, sides, or on top at the roof structure 112 of the vehicle 100. In one example, the roof structure 112 includes an overhead structural beam 104a disposed between two adjacent overhead windows 106 forming a part of the roof structure 112. In such an example, the beam 104a of the roof structure 112 can be situated generally horizontally, extending from the front end 108 to the rear end 110. Beams 104a of the roof structure 112 can also include "spines," "roof beams," "cross-beams," or other related beam structures.

The vehicle 100 can also include a beam 104b situated on the side of the vehicle 100 and disposed between two adjacent windows 106 such that the beam 104 is configured vertically up and down between the windows 106. Such vertical structural beams 104b can include side pillars. Structural beams 104 can also be disposed at the corner edges of the body 102, either horizontally or vertically as shown.

Any of the features, components, and/or parts, including the arrangements and configurations thereof shown in FIG. 1 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 1.

FIG. 2 illustrates a perspective view of another example of the vehicle 200 including a body 202 having a roof structure 212 and various structural beams 204 and windows 206. In the illustrated example of FIG. 2, the roof structure 212 includes a horizontal beam 204 spanning a width of the vehicle 200 rather than extending from the front end 208 to the rear end 210, like the example vehicle 100 shown in FIG. 1. The vehicle 200 shown in FIG. 2 also includes first and second windows 206 disposed adjacent the beam 204 of the roof structure 212 such that the beam 204 of the roof structure 212 is disposed between the adjacent windows 206. In this way, the two windows 206 form a part of the roof structure 212.

FIG. 2 illustrates the vehicle 200 having a single window 206 on the side of the vehicle 200 and a single window 206 disposed at or near the front end 208 of the vehicle 200. The various examples of vehicles described and shown herein are not meant as limiting, but rather illustrative of the variety of possible configurations of the vehicle bodies, such as body 102 of vehicle 100 shown in FIG. 1, and body 202 of vehicle 200 shown in FIG. 2. In other examples not shown in the figures or described herein, vehicles can include any number and arrangement of structural beams and windows that define an interior cabin volume configured to receive and transport occupants.

Any of the features, components, and/or parts, including the arrangements and configurations thereof shown in FIG. 2 can be included, either alone or in any combination, in any of the other examples of devices, features, components, and parts shown in the other figures. Likewise, any of the features, components, and/or parts, including the arrangements and configurations thereof shown in the other figures can be included, either alone or in any combination, in the example of the devices, features, components, and parts shown in FIG. 2.

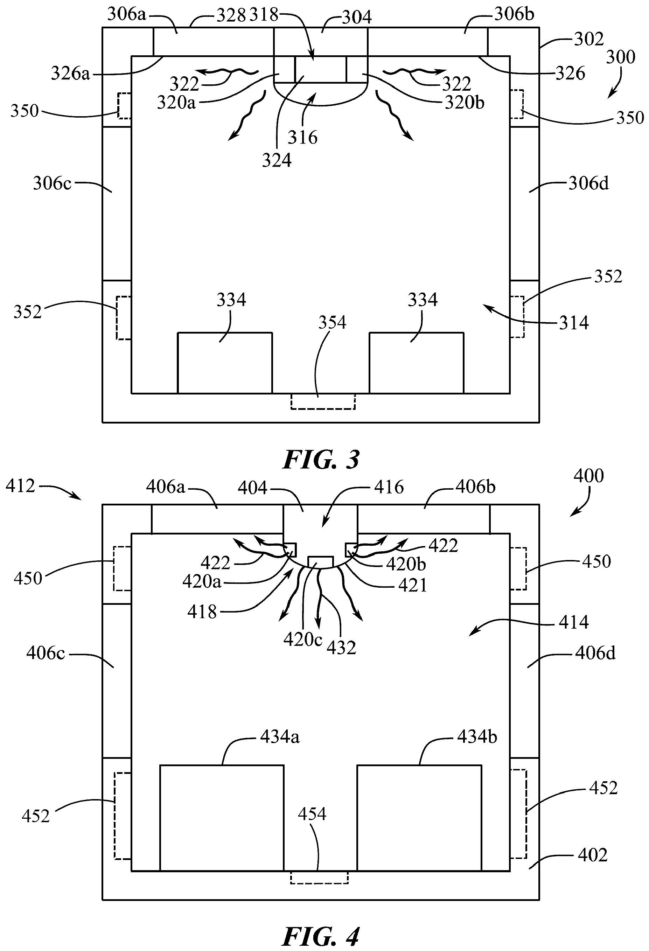

FIG. 3 illustrates a side cross-sectional view of another example of a vehicle 300 including a body 302 defining an interior cabin volume 314, otherwise referred to as a cabin 314. The body 302 includes a first overhead window 306a and a second overhead window 306b, each positioned adjacent to a structural beam 304 that is disposed between the first and second overhead windows 306a, 306b. The vehicle 300 can also include one or more side windows 306c and 306d. The beam 304 shown in FIG. 3 can be disposed "overhead" such that the beam 304 is situated above the one or more occupants that may be seated in the cabin 314, including occupants seated on seats 334. The term "overhead" should be interpreted broadly to include a beam 304 that is directly above one or more occupants, or above and to the side of the occupant. The beam 304 can also define an interior structural volume 316, which can also be referred to as an interior beam volume 316.

In at least one example, the vehicle 300 can also include a ventilation system 318. The ventilation system 318 can be an adaptive structural cooling system configured to cool the structure of the body 302, including the first and second overhead windows 306a, 306b and/or side windows 306c, 306d and other portions of the body 302. At least one example, the ventilation system 318 can include a duct 324 disposed within the interior structural volume 316 of the beam 304 as part of the body 302. In addition, at least one example of the ventilation system 318 can include a first vent 320a and/or a second vent 320b. The first and/or second vents 320a, 320b of the ventilation system 318 can be configured to direct air from the duct 324 into the interior cabin 314.

Specifically, in at least one example, the first and/or second vents 320a, 320b of the ventilation system 318 shown in FIG. 3 can direct air 322 toward the body 302 to lower a temperature of the body 302. In one example, the air 322 is directed at the first and/or second overhead windows 306a, 306b. For example, the first vent 320a can direct air 322 at, toward, or onto an interior surface 326a of the first window 306a. The first window 306a can also include an exterior surface 328 that defines an outer surface of the body 302 of the vehicle 300. Additionally or alternatively, the second vent 320b of the environmental can addition system 318 can direct air 322 at, toward, or onto an interior surface 326b of the second window 306b. The air 322 directed onto the first and/or second overhead windows 306a and 306b can reduce a temperature of the interior surface 326 of the windows 306a, 306b to reduce or otherwise manage radiation due to the windows 306a, 306b via convective heat transfer. Similarly, air can be directed at the side windows 306c and 306d to reduce a solar load of heating the interior cabin 314.

In this way, the windows 306a - d, which may introduce heat transfer to an occupant within the cabin 314 and would otherwise create a temperature imbalance or an uncomfortable temperature for the occupant, can be cooled by the ventilation system 318 such that the discomfort is minimized. While the air 322 directed by the first and second vents 320a, 320b directly impinges upon the interior surface 326 of the windows 306a, 306b, the air 322 can subsequently be circulated and recirculated around the volume of the cabin 314 to affect the overall or average temperature and climate of the cabin 314 more generally. However, initially or predominantly, the air 322 extending from the vents 320a, 320b of the ventilation system 318 disposed in the beam 304 is configured to affect the heat transfer due to radiation through the windows 306a - d.

In addition to, or alternatively to, the vents 320a, 320b shown in the beam 304, one or more other vents can be located elsewhere in or on the vehicle 300, including in or on other structural elements or components thereof. In one example, a third vent 350 can be disposed in or on the body 320 of the vehicle 300 above the side window 306d or the side window 306c. In one example, a fourth vent 350 can be disposed in or on the body 302 below the side window 306d or the side window 306c. Each of the vents 350 and 352 can be disposed in a vertical or horizontal side-beam of the body 302. In at least one example, each of the vents 350 and 352 can be configured to direct and/or indirect cooling of the cabin 314 and structure of the vehicle, including windows 306a - d as described above with reference to vents 320a and 320b.

Any of the features, components, and/or parts, including the arrangements and configurations thereof shown in FIG. 3 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 3. For example, a vehicle not shown in FIG. 3 can include a vertical side beam and an overhead beam with ventilation systems disposed in both beams. That is, the ventilation system 318 shown in FIG. 3 can be combined with the ventilation systems of vehicles shown in FIGS. 1 and 2 within a single vehicle that includes a vertical side beam and a horizontal beam as part of a single vehicle structure.

FIG. 4 illustrates a side cross-sectional view of another example of a vehicle 400 including a body 402 having a roof structure 412. The roof structure 412 can include a structural beam 404 defining an interior beam volume 416 disposed between adjacent overhead windows 406a and 406b. The body 402, including the first and second windows 406a and 406b and the beam 404 of the roof structure 412, can define an interior volume or cabin 414 configured to house one or more occupants in the vehicle 400. In at least one example, the vehicle 400 can include occupant seats 434a and 434b disposed in the cabin 414. In one example, the vehicle can also include side windows 406c and 406d.

As shown in FIG. 4, the vehicle 400 can also include a ventilation system 418, including a vent body 421 defining a first vent 420a, a second vent 420b, and a third vent 420c. In at least one example, the vent body 421 can extend from the beam 404 and be connected to the beam 404. In one example, the vent body 421 can be integrally formed with the beam 404. In one example, the vent body 421 and the beam 404 can together define the interior beam volume 416. In one example, the vent body can include or define one or more ducts, such as the duct 324 shown in FIG. 3. In one example, the vent body 421 and the beam 404 can share, include, and/or define a single duct or multiple ducts within the interior beam volume 416.

The vents 420a - c are configured to direct air 422, 432 from the interior beam volume 416 toward the body 402, including toward the roof structure 412 and windows 406a - b thereof. The vents 420a - 420c can include a first indirect vent 420a directing first conditioned air 422 at the first window 406a and a second indirect vent 420b directing the first conditioned air 422 at the second window 406b. The first conditioned air 422 exiting the first and second indirect vent 420a and 420b is not necessarily the same conditioned air in all contemplated examples. In at least one example, the air exiting one indirect vent 420a may be conditioned at a different temperature or humidity than the conditioned air 422 exiting at the second indirect vent 420b.

The environment of conditioning system 418 can include a direct vent 420c configured to direct a second conditioned air 432 away from the first and second windows 406a and 406b. In at least one example, the direct vent 420c of the ventilation system 418 can be configured to direct or steer the second conditioned air 432 directly at occupants within the cabin, for example, occupants seated at or on the first seat 434a and/or the second seat 434b. In at least one example, the direct vent 420c can be one of multiple direct vents of the ventilation system 418 that can be manipulated to change the direction of the second conditioned air 432 based on preferences of the occupants within the cabin 414.

In at least one example, the first window 406a and the second window 406b are disposed above the one or more seats 434a, 434b where the occupants may be seated. For example, in the illustrated example of FIG. 4, the first window 406a is disposed over and above the first seat 434a and the second window 406b is disposed over and above the second seat 434b. In addition, the beam 404 can be an overhead beam disposed above the area or volume occupied by the seats 434a and 434b, and/or occupants seated thereon.

In at least one example, the indirect vents 420a, 420b direct the first conditioned air 422 at or toward the interior surfaces of the window 406a, 406b, while the direct vent 420c directs the second conditioned air 432 away from the first and second windows 406a, 406b toward the inside of the cabin 414, as shown in FIG. 4. In at least one example, the first conditioned air 422 can be a different temperature than the second conditioned air 432. In one example, the first and second conditioned air 422, 432 can be the same temperature and/or humidity and can be generated from the same source. In at least one example, the indirect vents 420a, 420b can direct the first conditioned air 422 at a first velocity and the direct vent 420c can direct the second conditioned air 432 at a second velocity. The second velocity can be the same or different than the first velocity.

In at least one example, the beam 404 can define an interior beam volume 416 through which the first and second conditioned air 422 and 432 is transported and ultimately exits the vents 420a, 420b, and 420c. In at least one example, the beam 404 defines one or more of the vents 420a, 420b, and 420c. For example, the vents 420a, 420b, and 420c can be formed as apertures defined by the beam 404. Also, as noted above with reference to other figures and examples, one or more ducts disposed within the interior beam volume 416 can transport the air 422 and 432 from an external source or intake component, through the duct in the beam 404, and out the various events 420a, 420 B, and 420c.

In the illustrated example of FIG. 4, the ventilation system 418 includes both indirect ventilation through the direct vents 420a, 420b as well as direct ventilation through the direct vent 420c. As noted above, the direct vent 420c can be manipulated and controlled by one or more occupants in the cabin 414 to change the direction, temperature, velocity, or other characteristic of the second conditioned air 432. In at least one example, the first conditioned air 422 directed at the window 406a, 406b can be automatically adjusted based on a sensed temperature of the windows 406a, 406b or radiation heat transfer through the windows 406a, 406b. In this way, the first conditioned air 422 can be temperature and humidity adjusted without manual input by the occupant in the cabin 414 to adapt to the changing external environment producing the radiation to the windows 406a, 406b.

In at least one example, the first conditioned air 422 can be manually adjusted or controlled by the occupants in the cabin 414 and the second conditioned air 432 exiting the direct vent 420c can be automatically controlled. In any case, the first conditioned air 422 exiting the first and second indirect vents 420a, 420b can be configured to directly impinge on and manage the temperature and heat transfer of the body 402 of the vehicle, and in particular, the temperature of the interior surfaces of the window 406a, 406b. This heat transfer management of radiation at the windows 406a, 406b can reduce the uncomfortable contribution from the radiation to the occupants seated on the seats 434a, 434b or elsewhere in the cabin 414. Simultaneously, the occupants can adjust or control the direct vent 420c and the second conditioned air 432 to further adjust comfort according to preferences of the occupants.

Any of the features, components, and/or parts, including the arrangements and configurations thereof shown in FIG. 4 can be included, either alone or in any combination, in any of the other examples of devices, features, components, and parts shown in the other figures. Likewise, any of the features, components, and/or parts, including the arrangements and configurations thereof shown in the other figures can be included, either alone or in any combination, in the example of the devices, features, components, and parts shown in FIG. 4.

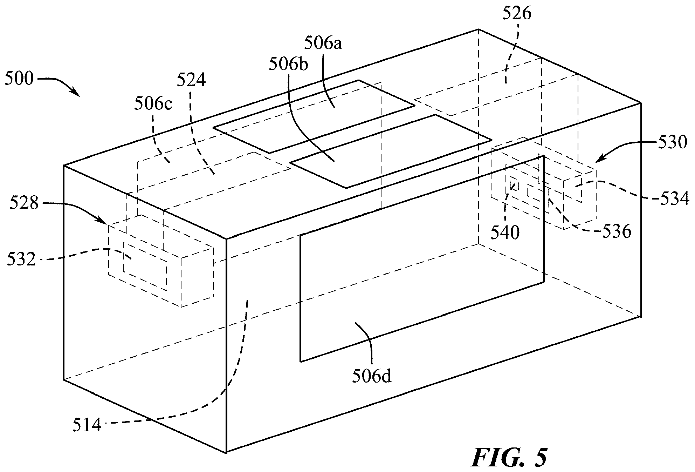

FIG. 5 illustrates a perspective view of an example of a vehicle 500 with an environmental conditioning system for an interior vehicle cabin 514, which can include a first HVAC system 528 comprising a first blower 532, a second HVAC system 530, and an exhaust unit 534. The first HVAC system 528 can contain a first air duct 524 that can disperse air to a passenger inside the vehicle cabin 514. The second HVAC system 528 can contain a second air duct 526 that can be physically separated from the first air duct 524. The second HVAC system 530 can have a second blower 536 which can be configured to recirculate cabin air within the cabin 514. The second blower 536 can contain a recirculation intake 540 and an exhaust unit 534.

Air ducts 524, 526 can disperse air via the first and second HVAC systems 528, 530 into the cabin 514 such that the cabin receives zone conditioning dependent on the location of the occupant. The first HVAC system 528 can blow air through the first air duct 524 providing conditioned air that can vary from the second HVAC system 530, which can blow air through the second air duct 526, providing conditioned air differing from the first HVAC system 528. Air blown from the first HVAC system 528 by the first blower 532, can be from an external environment be received into the first HVAC system 528 and blown through the first duct 524 into the cabin 514, which can be a front portion of the cabin 514 wherein the first HVAC system 528, which can include at least the first blower 532 and first air duct 524, can be located. Air blown from the second HVAC system 530 by the second blower 536, can be received by the recirculation intake 540 of the second HVAC system 530. The second HVAC system 530 can be disposed in and can provide conditioned air to a zone in the rear of the cabin 514. The second HVAC system 530 can include at least the second blower 536, the recirculation intake 540, and an exhaust unit 534.

Air ducts 524, 526 can disperse air in the longitudinal and/or vertical direction of the cabin 514, and the air dispersed can flow over the top windows 506a and 506b or along the side windows 506c and 506d, providing convection conditioning. This conditioning action can include cooled air blown from the air ducts 524, 526 on the windows 506a - d from the cabin interior, which can cause the windows 506a - d, which may have become heated due to exterior environmental conditions, to be cooled by convection as the cooled air blown by the blowers 532, 536 and directed by the air ducts 524, 526 passes over the windows 506a - d. In this way, the system maintains a desirable ambient temperature within the cabin 514. The air ducts 524, 526 can be used to cool any portion of the interior vehicle cabin 514, including seats or any other portion of the cabin enclosure (e.g., windows, windshield, interior cabin panels, or other components within the vehicle cabin interior), by directing air over the desired portion.

Similarly, heated air can be blown from the air ducts 524, 526 onto the windows 506a - d from the cabin interior, which can cause the windows, which may have become cooled due to exterior environmental conditions, to be heated by convection as the heated air blown by the blowers 532, 536 and directed by the air ducts 524, 526 passes over the windows 506a - d. Again, this process can be used to maintain a desirable ambient temperature within the cabin 514. The air ducts 524, 526 can be used to heat any portion of the interior vehicle cabin 514, which can include but is not limited to seats or any other portion of the cabin interior (e.g., windows, windshield, interior cabin panel, or other components within the vehicle cabin interior), by directing air over the desired portion.

The first and second HVAC systems 528, 530 can circulate, recondition, or otherwise recycle the air within the interior vehicle cabin 514 such that the air within the cabin 514 remains conditioned to meet a user selected, or autonomously selected, condition or preference. Conditioning preferences and settings can react to feedback, such as thermal feedback (e.g., temperature, relative humidity, infrared temperature of occupants, windows, or other cabin features), zonal feedback from zones within the vehicle cabin (e.g., longitudinal, latitudinal, upper, lower, or any combination thereof), and feedback from exterior ambient conditions (e.g., temperature, humidity, altitude, solar exposure, etc.). Other sources of for automated systems are also contemplated herein.

Any of the features, components, and/or parts, including the arrangements and configurations thereof shown in FIG. 5 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 5.

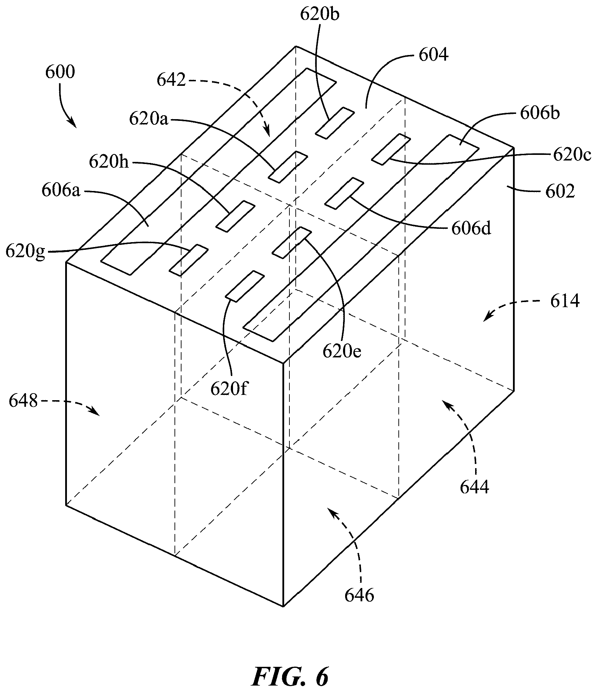

FIG. 6 illustrates a vehicle 600 including a body 802 having a beam 604 disposed between a first window 606a and a second window 606b. The dotted lines indicating planes within the interior cabin volume 614 defined by the body 602 indicate four zones 642, 644, 646, and 648. Each zone 642, 644, 646, and 648 represents a volumetric portion of the interior cabin volume 714. In one example, the first window 606a defines the first zone 642 and the fourth zone 648 and the second window 606b defines the second zone 644 and the third zone 646. The vehicle can include vents 620a - h configured to carry conditioned air to each zone 642, 644, 646, and 648. In one example, each zone 642, 644, 646, and 648 includes two vents of the illustrated vents 620a - h configured to direct air there into.

For example, the first zone 642 can include a first vent 620a and a second vent 620b configured to guide conditioned air into the first zone 642 of the cabin 614. In one example, the first vent 620a can be a direct vent guiding air toward an occupant or seat in the first zone 642 and the second vent 620b can be an indirect vent guiding air toward and onto the first window 606a or other roof or body structure. In at least one example, each of the first and second vents 620a, 620b associated with the first zone 642 can each be operable between both a direct configuration and an indirect configuration. The switching of each vent 620a, 620b is described in more detail below with reference to other figures.

Likewise, each pair of vents, including the third vent 620c and the fourth vent 620d guiding air into the second zone 644, the fifth vent 620e and the sixth vent 620f guiding air into the third zone 646, and the seventh vent 620g and the eight vent 620h guiding air into the fourth zone 648, can be configured as direct vents, indirect vents, or vents operably switchable between direct and indirect configurations. In this way, each zone 642, 644, 646, and 648 of the cabin 614 can be optimally conditioned and cooled based on the occupants therein and the environmental conditions of each zone 642, 644, 646, and 648. For example, the position of the windows 606a and 606b relative to the sun could affect one zone 642, 644, 646, and 648 more than another depending on the position or orientation of the vehicle 600. In such an example, the environmental conditioning system may be more effective as an indirect ventilation system in one zone 642, 644, 646, and 648 and a direct ventilation system in another zone 642, 644, 646, and 648.

In addition, different occupants seated in different zones 642, 644, 646, and 648 may have different preferences. For example, an occupant in the first zone 642 may prefer direct ventilation while an occupant in the third zone 646 may prefer indirect ventilation. In such an example, the vents 620a - 620h of each zone 642, 644, 646, and 648 can be customized to the preference of the occupant.

Any of the features, components, and/or parts, including the arrangements and configurations thereof shown in FIG. 6 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 6.

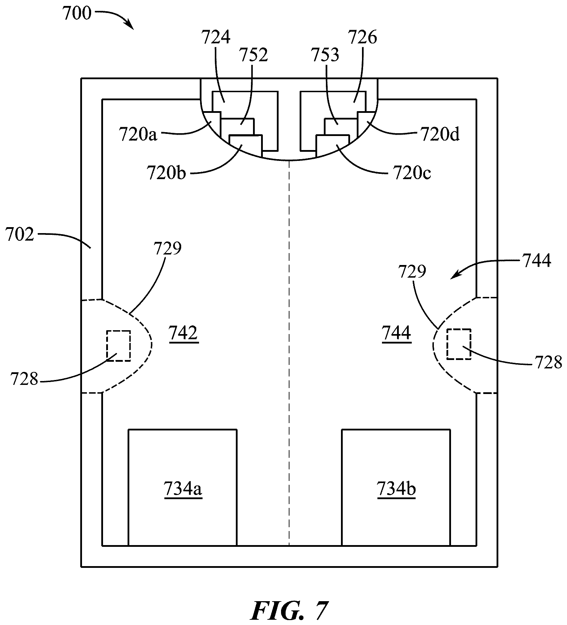

FIG. 7 illustrates an example of a vehicle 700 including a body defining an interior cabin 714 and two occupant seats 734a and 734b. An environmental conditioning system of the vehicle 700 can include a first duct 724 configured to carry a first portion of conditioned air to and out from a first vent 720a and a second vent 720b. The environmental conditioning system can also include a second duct 726 configured to carry air to and out from the third vent 720d and a fourth vent 720c. The interior cabin 714 of the vehicle 700 can define two zones, a first zone 742 and a second zone 744, as indicated by the dotted line. The first occupant seat 734a can be disposed in the first zone 742 and a second occupant seat 734b can be disposed in the second zone 744. In at least one example, the environmental conditioning system can also include a first switch 752 operable between a first position and a second position and a second switch 753 operable between a first position and a second position.

In at least one example, a position of the first switch 752 can determine which vent 720a, 720b the air directed by the first duct 724 exits. Similarly, a position of the second switch 753 can determine which vent 720c, 720d the air directed by the second duct 726 exits. In at least one example, the first vent 720a is an indirect vent and the second vent 720b is a direct vent such that with the first switch 752 in a first position, the air from the first duct 724 is guided out the first vent 720a toward the body 702 and away from the occupant seats 734a, 734b and with the first switch 752 in a second position, the air from the first duct 724 is guided out the second vent 720b into the first zone 742 and/or toward the first occupant seat 734a. The first vent 720a can be configured to direct air toward an upper portion or roof of the body 702.

Likewise, In at least one example, the third vent 720c is an indirect vent and the fourth vent 720d is a direct vent such that with the second switch 753 in a first position, the air from the second duct 726 is guided out the third vent 720c toward the body 702 and away from the occupant seats 734a, 734b and with the second switch 753 in a second position, the air from the second duct 726 is guided out the fourth vent 720d into the second zone 744 and/or toward the second occupant seat 734b. The third vent 720c can be configured to direct air toward an upper portion or roof of the body 702.

The first and second switches 752, 753 can be mechanical switches physically blocking or unblocking through the relative vents 720a - d shown in FIG. 7. The switches 752, 753 can be automatically or manually operable between positions. In examples where the switches 752, 753 are automatically operable, the switches 752, 753 can be electrically coupled to one or more processors or controllers receiving input from environmental sensors. Based on detected temperatures, humidity, solar load, and so forth, the controller can cause the switches 752, 753 to change from one position to another.

In at least one example one or more of the switches 752, 753 can be disposed in the interior volume of a structural beam or other structural portion of the body 702 of the vehicle 700 and out of sight of the occupants in the interior cabin 714. For example, the switches 752, 753 can be disposed within the first or second ducts 724, 726 such that the structural beam or body 702 of the vehicle 700 blocks the view of each switch 752, 753 through the vents 720a - d from the perspective of occupants in the cabin 714, for example occupants seated on the occupant seats 734a and 734b.

In at least one example, the ventilation system and components described above, including ducts 724, 726, vents 720a - d, and switches 752, 753 can be incorporated elsewhere in one or more structural components of the vehicle 700. For example, one or more side structural beams 729 can be incorporated with the body 702 of the vehicle 700 and each side structural beam 729 can include one or more ventilation systems 728 similar to that shown and described above. In at least one example, the ventilation systems 728 of side structural beams 729 can include various ducts, vents, and switches to alternate between direct and indirect ventilation configurations directed at occupants and occupant seats 734 or windows and other body structures, respectively.

Any of the features, components, and/or parts, including the arrangements and configurations thereof shown in FIG. 7 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 7.

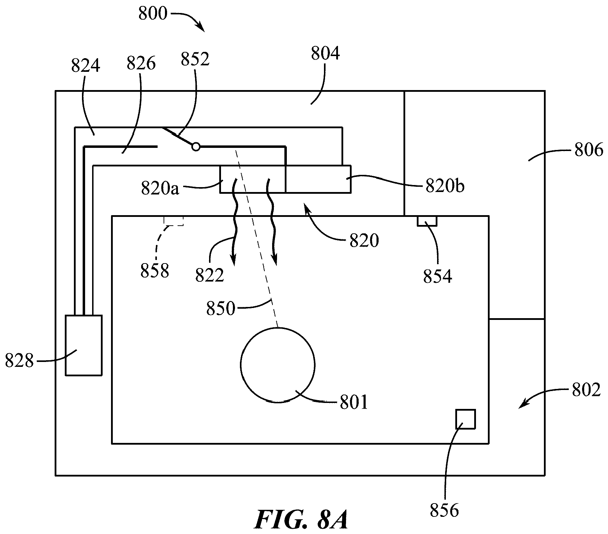

FIG. 8A illustrates another example of a vehicle 800 including a body 802 and a window 806. The vehicle 800 also include an HVAC system 828 which can be similar to the HVAC systems 528 and 530 shown in FIG. 5. The HVAC system 828 of claim 8A can include an air mover, such as a blower, to move air through first and second ducts 824, 826 toward and out a vent 820. In at least one example, the vent 820 can be a single vent to which both the first and second ducts 824, 826 direct air. In at least one example, the vent 820 can include a first vent 820a and a second vent 820b. The HVAC system 828 can be configured to move air through the vent 820, including through the first vent 820a or the second vent 820b depending on the position of the switch 852.

The window 806 can be disposed adjacent to a structural beam 804 of the vehicle 800 and the first vent 820a of the vent 820 can be configured as a direct vent guiding air 822 toward the occupant 801 within the vehicle 800. As noted above, in at least one example, the switch 852 can be operable between a first position and a second position. The switch 852 can be positioned within an interior volume of the beam 804, for example within the first and/or second ducts 824, 826 or at an interface there between. FIG. 8A shows the switch 852 in the first position such that the vent 820 is in a direct configuration directing air 822 through the first vent 820a in a first direction directly at the occupant 801. The air 822 can be blown through an interior volume of the beam 804 through the ducts 824, 826. The switch 852 is configured to direct the air 822 through the second duct 826 toward the second vent 820b when operating in the first position as shown in FIG. 8A.

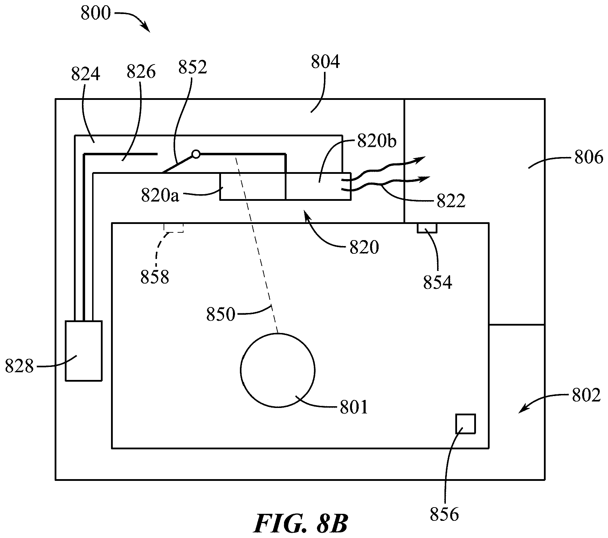

FIG. 8B shows the switch 852 in a second position such that the vent 820 is in an indirect configuration guiding air 822 from the ducts 824, 826 toward and out the second vent 820b of the vent 820. In such a configuration, the air 822 is directed from the ducts 824, 826 in the interior volume of the beam 804 in a second direction toward the window 806 and away from the occupant 801. The switch 852 is configured to direct the air 822 through the first duct 824 toward the first vent 820a when operating in the second position as shown in FIG. 8B.

Also illustrated in FIGS. 8A and 8B is the line of sight 850 of the occupant 801. The structural beam 804 is positioned within the line of sight 850 extending between the occupant 801 and the switch 852 to block a view of the switch 852, whether the switch 852 is in the first position shown in FIG. 8A or the second position shown in FIG. 8B. In this way, the vent 820 can alternate between the direct and indirect configurations without visually changing from the perspective of the occupant 801.

The vehicle 800, as shown in the example of FIGS. 8A and 8B, can also include one or more sensors 854 and 856 disposed at various locations on or within the vehicle 800. The sensors 854, 856 can be electrically coupled to the switch 852 via a controller, including a processor, such that the controller can operate the switch 852 between the first and second positions based on detected conditions within the vehicle 800. For example, the first sensor 854 can include a solar load sensor disposed on or near the window 806. The sensor 854 can thus be configured to detect and measure a solar load or radiative heat from the sun impinging on the window 806. The second sensor 856 can include a temperature sensor, humidity sensor, or other environmental sensor located on or within the vehicle 800 to measure a temperature within the vehicle 800. Based on these measurements, the controller can actuate the switch 852 to best counteract the temperature of the vehicle 800, whether the temperature be too high or too low for the comfort of the occupant 801, in order to reach a target temperature.

In one example, a hot sunny day may be sensed by the first sensor 854, such as a solar load sensor, such that the switch 852 is operated in the second position shown in FIG. 8B. In this configuration, the vent 820 can include an indirect cooling operational mode to direct cool air 822 toward the window 806 to counteract the radiative heating through the window 806. Conversely, for example on a cloudy day with less solar load on the vehicle 800 and the window 806, measurements from the second sensor 856 can be used by the controller to actuate the switch into the first position shown in FIG. 8A. In this direct ventilation configuration, based on the conditions in the vehicle 800 as detected by the sensors 854, 856, the air 822 can be guided directly the occupant 801. The examples given are not meant as limiting but as examples of how the sensors 854, 856 can be used to automatically operate the switch 852 to provide the most appropriate ventilation configuration for any given scenario. Other examples can include more or less sensors than the two sensors 854, 856 shown in FIGS. 8A and 8B.

The vehicle 800 can also include a manual switch actuator 858, which can be a mechanical and/or electrical actuator coupled with the operation of the switch 852, for manually actuating or operating the switch between the first and second positions shown in FIGS. 8A and 8B. For example, if the occupant desires to switch the vent 820 from a direct mode to an indirect mode, or vice versa, the occupant can do so by pressing, moving, or otherwise manipulating the manual switch actuator 858.

Any of the features, components, and/or parts, including the arrangements and configurations thereof shown in FIGS. 8A and 8B can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIGS. 8A and 8B.

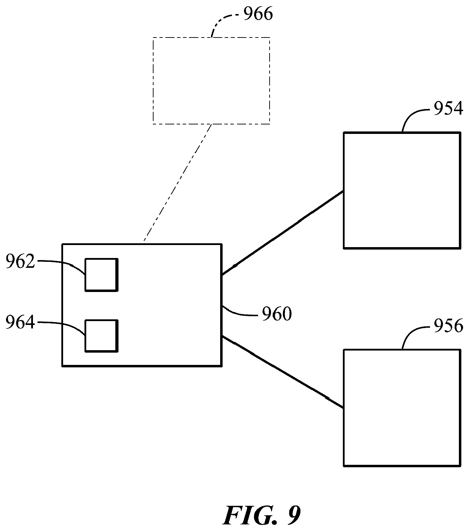

FIG. 9 illustrates a diagram of a controller 960 electrically coupled to an environmental conditioning system 956 such as those described herein. In one example, the controller 960 can include a processor 962 and memory component 964 storing electronic instructions that, when executed by the processor 962, cause the controller to operate the switch of the environmental conditioning system 956. The controller can execute an algorithm stored on the memory component 964 taking into account the sensor system 954, which can include the various sensors of vehicles described herein. In one example, the sensor system 954 can include a solar load sensor, a temperature sensor, a humidity sensor, and so forth. The sensor system 954 can be electrically coupled to the controller 960 to send signals to the controller 960.

In at least one example, the controller can be electrically coupled to an occupant device 966, for example wirelessly coupled to the smartphone or computer of an occupant, to input information received from that device that may be useful in determining the most appropriate ventilation configuration, for example direct or indirect, for each vent within the vehicle. In one example, the controller 960 can include an antenna wirelessly communicating with the device 966 of the occupant to input the occupant's schedule information. The device 966 can also relay information regarding the identity of the occupant, which may include environmental condition preferences learned or determined by the controller 960. The information of the occupant gathered from the device 966 can be used to operate each switch of each vent in the vehicle for optimal conditioning of the vehicle cabin before and/or after the arrival of the occupant in the vehicle.

Any of the features, components, and/or parts, including the arrangements and configurations thereof shown in FIG. 9 can be included, either alone or in any combination, in any of the other examples of devices, features, components, and parts shown in the other figures described herein. Likewise, any of the features, components, and/or parts, including the arrangements and configurations thereof shown and described with reference to the other figures can be included, either alone or in any combination, in the example of the devices, features, components, and parts shown in FIG. 9.

In some examples, the present systems and methods can be customized to particular users. In the event that the potential customization includes the collection, storage, use, or transmission of personal information data, such collection, storage, use, or transmission should be conducted in accordance with policies and practices that are generally recognized as meeting or exceeding industry or governmental requirements for maintaining personal information data private and secure.

The foregoing description, includes reference to specific nomenclature to provide a thorough understanding of the described embodiments. However, the specific details are not required in order to practice the described embodiments. Thus, the foregoing descriptions of the specific embodiments described herein are presented for purposes of illustration and description and are not intended to be exhaustive or to limit the embodiments to the precise forms disclosed. Furthermore, many modifications and variations are possible in view of the above teachings.

Exemplary embodiments of the present disclosure are set out in the following items:
1. A vehicle, comprising:
   a structural beam defining an interior beam volume;
   a window adjacent the structural beam;
   an interior cabin defined by the structural beam and the window;
   an occupant seat disposed in the interior cabin; and
   an environmental conditioning system, comprising a switch operable between a first position and a second position;
   wherein:
   when the switch operates in the first position, the environmental conditioning system is configured to direct air from the interior beam volume onto the window; and
   when the switch operates in the second position, the environmental conditioning system is configured to direct the air from the interior beam volume toward the occupant seat.
2. The vehicle of item 1, wherein the switch is disposed in the interior beam volume such that the structural beam blocks a view of the switch by an occupant seated on the occupant seat.
3. The vehicle of item 2, further comprising a first duct disposed in the interior beam volume and a second duct disposed in the interior beam volume, wherein:
   the switch is configured to direct the air through the first duct when operating in the first position; and
   the switch is configured to direct the air through the second duct when operating in the second position.
4. The vehicle of item 3, further comprising:
   an indirect vent through which the air exits from the first duct onto the window; and
   a direct vent through which the air exits from the second duct toward the occupant seat.
5. The vehicle of any of items 3-4, further comprising a vent, wherein the first duct and the second duct direct air through the vent.
6. The vehicle of any of items 1-5, wherein the switch is automatically operable based on input received from a vehicle environmental sensor.
7. The vehicle of any of items 1-6, wherein:
   the window is a first window;
   the vehicle comprises a second window adjacent the structural beam; and
   the structural beam includes an overhead structural beam disposed between the first window and the second window.
8. The vehicle of item 7, wherein the overhead structural beam defines a vent configured to direct the air from the interior beam volume onto the first window or toward the occupant seat.
9. A vehicle, comprising:
   a beam defining an interior beam volume;
   a roof;
   an interior cabin defined by the roof and the beam, the interior cabin defining a first volume and a second volume;
   a first vent to direct first conditioned air from the interior beam volume into the first volume, the first vent including a first direct vent configured to guide the first conditioned air away from the roof and a first indirect vent configured to guide the first conditioned air toward the roof; and
   a second vent to direct second conditioned air from the interior beam volume into the second volume, the second vent including a second direct vent configured to guide the second conditioned air away from the roof and a second indirect vent configured to guide the second conditioned air toward the roof.
10. The vehicle of item 9, further comprising a first switch disposed in the interior beam volume, the first switch operable between a first position and a second position, wherein:
   in the first position, the first indirect vent is configured to guide the first conditioned air toward the roof; and
   in the second position, the first direct vent is configured to guide the first conditioned air away from the roof.
11. The vehicle of item 10, further comprising a second switch disposed in the interior beam volume, the second switch operable between the first position and the second position, wherein:
   in the first position, the second indirect vent is configured to guide the second conditioned air away from the roof; and
   in the second position, the second direct vent is configured to guide the second conditioned air toward the roof.
12. The vehicle of any of items 9-11, wherein the roof comprises the beam.
13. The vehicle of item 12, wherein the roof comprises a first window and a second window.
14. The vehicle of item 13, wherein the beam is disposed between the first window and the second window.
15. The vehicle of item 14, wherein the first volume is defined by the first window and the second volume is defined by the second window.
16. A vehicle cabin conditioning system, comprising:
   a duct disposed within an overhead beam of the vehicle;
   a first vent to direct air from the duct toward a window adjacent the overhead beam; and
   a second vent operable between a first operational configuration to direct the air in a first direction toward the window and a second operational configuration directing the air in a second direction toward an occupant in the vehicle cabin.
17. The vehicle cabin conditioning system of item 16, the second vent further comprising a switch disposed within the overhead beam and operable between a first position and a second position, wherein:
   in the first position, the second vent is configured to direct air in the first direction; and
   in the second position, the second vent is configured to direct air in the second direction.
18. The vehicle cabin conditioning system of item 17, wherein the switch is automatically operable between the first position and the second position based on a detected solar load impinging on the window.
19. The vehicle cabin conditioning system of any of items 16-18, wherein the first direction is away from the occupant.
20. The vehicle cabin conditioning system of any of items 16-19, wherein the second direction is away from the window.

## Claims

1. A vehicle, comprising:
a structural beam defining an interior beam volume;
a window adjacent the structural beam;
an interior cabin defined by the structural beam and the window;
an occupant seat disposed in the interior cabin; and
an environmental conditioning system, comprising a switch operable between a first position and a second position;
wherein:
when the switch operates in the first position, the environmental conditioning system is configured to direct air from the interior beam volume onto the window; and
when the switch operates in the second position, the environmental conditioning system is configured to direct the air from the interior beam volume toward the occupant seat.

2. The vehicle of claim 1, wherein the switch is disposed in the interior beam volume such that the structural beam blocks a view of the switch by an occupant seated on the occupant seat.

3. The vehicle of claim 2, further comprising a first duct disposed in the interior beam volume and a second duct disposed in the interior beam volume, wherein:
the switch is configured to direct the air through the first duct when operating in the first position; and
the switch is configured to direct the air through the second duct when operating in the second position.

4. The vehicle of claim 3, further comprising:
an indirect vent through which the air exits from the first duct onto the window; and
a direct vent through which the air exits from the second duct toward the occupant seat.

5. The vehicle of any of claims 3-4, further comprising a vent, wherein the first duct and the second duct direct air through the vent.

6. The vehicle of any of claims 1-5, wherein the switch is automatically operable based on input received from a vehicle environmental sensor.

7. The vehicle of any of claims 1-6, wherein:
the window is a first window;
the vehicle comprises a second window adjacent the structural beam; and
the structural beam includes a structural beam disposed between the first window and the second window.

8. The vehicle of claim 7, wherein the structural beam defines a vent configured to direct the air from the interior beam volume onto the first window or toward the occupant seat.

9. The vehicle of any of claims 1-8, wherein:
the vehicle further comprises a roof;
the interior cabin is defined by the roof, the interior cabin defining a first volume and a second volume;
the air comprises first conditioned air and second conditioned air; and
the environmental conditioning system further comprises:
a first vent to direct the first conditioned air from the interior beam volume into the first volume, the first vent including a first direct vent configured to guide the first conditioned air away from the roof and a first indirect vent configured to guide the first conditioned air toward the roof; and
a second vent to direct the second conditioned air from the interior beam volume into the second volume, the second vent including a second direct vent configured to guide the second conditioned air away from the roof and a second indirect vent configured to guide the second conditioned air toward the roof.

10. The vehicle of claim 9, further comprising a first switch disposed in the interior beam volume, the first switch operable between a first position and a second position, wherein:
in the first position, the first indirect vent is configured to guide the first conditioned air toward the roof; and
in the second position, the first direct vent is configured to guide the first conditioned air away from the roof.

11. The vehicle of claim 10, further comprising a second switch disposed in the interior beam volume, the second switch operable between the first position and the second position, wherein:
in the first position, the second indirect vent is configured to guide the second conditioned air away from the roof; and
in the second position, the second direct vent is configured to guide the second conditioned air toward the roof.

12. The vehicle of any of claim 9-11, wherein the roof comprises the beam.

13. The vehicle of claim 12, wherein the roof comprises a first window and a second window.

14. The vehicle of claim 13, wherein the beam is disposed between the first window and the second window.

15. The vehicle of claim 14, wherein the first volume is defined by the first window and the second volume is defined by the second window.
